# EUROPÄISCHE PATENTANMELDUNG

(11) **EP 1 731 881 A2**
(43) Veröffentlichungstag der Anmeldung: **13.12.2006**
(21) Anmeldenummer: 06005861.7
(22) Anmeldetag: 22.03.2006
(51) Int. Cl.: G01F 1/58

(54) **Magnetisch-induktives Durchflussmessgerät und Verfahren zur Herstellung eines magnetisch-induktiven Durchflussmessgeräts**

(30) Priorität: 25.04.2005 DE 102005019418
(71) Anmelder: KROHNE MESSTECHNIK GMBH & CO. KG, 47058 Duisburg (DE)
(72) Erfinder: Hofmann, Friedrich, 47638 Straelen (DE)
(74) Vertreter: Gesthuysen, von Rohr & Eggert

(57) **Zusammenfassung**

Die Erfindung betrifft ein magnetisch-induktives Durchflußmeßgerät sowie ein Verfahren zur Herstellung eines magnetisch-induktiven Durchflußmeßgeräts. Erfindungsgemäß ist vorgesehen, daß eine in dem Meßrohr (1) vorgesehene Elektrode (2) eine elektrisch leitfähige Diamantbeschichtung (3) aufweist, so daß die Elektrode (2) mittelbar, nämlich über die elektrisch leitfähige Diamantbeschichtung (3) in galvanisch leitenden Kontakt mit dem durch das Meßrohr (1) fließenden Medium kommt. Auf diese Weise wird eine mechanisch stabile Elektrode (2) erzielt, die zu einem rauschfreien Meßsignal führt.

## Beschreibung

Die Erfindung betrifft ein magnetisch-induktives Durchflußmeßgerät, mit einem Meßrohr zum Führen eines strömenden Mediums und einer in dem Meßrohr vorgesehenen Elektrode, die in galvanisch leitenden Kontakt mit dem strömenden Medium kommt. Die Erfindung betrifft ferner ein Verfahren zur Herstellung eines magnetisch-induktiven Durchflußmeßgeräts, wobei eine Elektrode in einem Meßrohr zum Führen eines strömenden Mediums derart angeordnet wird, daß die Elektrode in galvanisch leitenden Kontakt mit dem strömenden Medium kommt.

Magnetisch-induktive Durchflußmeßgeräte sind aus dem Stand der Technik gut bekannt, wozu exemplarisch verwiesen wird auf "K. B. Bonfig, Technische Durchflußmessung, 3. Auflage, Vulkan-Verlag Essen, 2002, S. 123 - 167", Das grundlegende Prinzip eines magnetisch-induktiven Durchflußmeßgeräts für strömende Medien geht zurück auf Faraday, der im Jahre 1832 vorgeschlagen hat, das Prinzip der elektrodynamischen Induktion zur Strömungsgeschwindigkeitsmessung anzuwenden.

Nach dem Faraday'schen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das Faraday'sche Induktionsgesetz wird bei einem magnetisch-induktiven Durchflußmeßgerät dadurch ausgenutzt, daß mittels einer Magnetfeldeinrichtung, wenigstens enthaltend einen Magneten mit typischerweise zwei Magnetspulen, ein Magnetfeld erzeugt und über die Querschnittsfläche des Meßrohrs geführt wird, welches Magnetfeld eine Magnetfeldkomponente aufweist, die senkrecht zur Strömungsrichtung verläuft. Innerhalb dieses Magnetfelds liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zu einer über die Elektroden abgreifbaren Meßspannung.

Ein besonderes Merkmal der magnetisch-induktiven Durchflußmeßgeräte ist dabei die Proportionalität zwischen der Meßspannung und der über den Querschnitt des Meßrohrs ermittelten Strömungsgeschwindigkeit des Mediums, d. h. zwischen Meßspannung und Volumenstrom. Im übrigen können neben den Elektroden zum Abgriff der Meßspannung weitere Elektroden vorgesehen sein, wie Elektroden zur Leerrohr-Detektion sowie Erdungselektroden, insbesondere auch in Form von Erdungsringen.

Bei metallischen Elektroden, die direkt in Kontakt mit dem strömenden Mediums treten, bildet sich eine elektrochemische Grenzschicht, die elektrochemische Gleichspannungen in der Größenordnung von mehreren 100 mV verursachen kann. Diese elektrochemischen Gleichspannungen können sich sehr schnell ändern, unter anderem nämlich in Abhängigkeit von Änderungen der lokalen Fließgeschwindigkeit des Mediums an den Elektroden aufgrund von Turbulenzen, in Abhängigkeit von Schwankungen des Betriebsdrucks, in Abhängigkeit vom pH-Wert des Mediums, in Abhängigkeit von der Zusammensetzung des Mediums, insbesondere bei noch laufenden chemischen Reaktionen im Medium, in Abhängigkeit von im Medium transportierten Feststoffpartikeln oder suspendierten Teilchen, die die elektrochemische Grenzschicht an den Elektroden stören, und in Abhängigkeit von in direkten Kontakt mit den Elektroden kommende, nämlich auf diese aufprallende Feststoffpartikel. Dies alles führt zu statistischen Schwankungen der elektrochemischen Gleichspannung an den Elektroden mit Amplituden von einigen µV bis zu einigen 10 mV. Diese statistischen Schwankungen der Spannung werden auch als Rauschspannung bezeichnet.

Diese Rauschspannung überlagert die durchflußproportionale Signalspannung, deren Signalstärke typischerweise 0,1 - 1 mV/(m/s), also 0,1 - 1 mV für eine Fließgeschwindigkeit von einem Meter pro Sekunde, beträgt. Die Amplitude dieser Rauschspannung kann also in der gleichen Größenordnung wie die durchflußproportionale Signalspannung oder sogar weit darüber liegen. Das kann zu starkem Rauschen und damit unruhigen, stark schwankenden Durchflußanzeigen des magnetisch-induktiven Durchflußmeßgeräts fuhren.

Um diesem Problem abzuhelfen, ist es aus dem Stand der Technik bekannt, die Bereiche der Elektroden, die mit dem Medium in Kontakt kommen, mit einer porösen Schicht aus einem nichtleitenden elektrisch inerten Material, wie einer porösen Keramik, zu überziehen. Das elektrisch leitfähige Medium dringt in diese Poren ein, und es stellt sich eine elektrisch leitende Verbindung vom Medium zum Metall der Elektroden und dem daran angeschlossenen Meßumformer her. Damit wird eine Mehrzahl positiver Effekte erzielt:

Das Medium, das in Kontakt mit dem Metall der Elektrode steht, wird nur sehr langsam ausgetauscht Plötzliche, die Messung störende Sprünge der Elektrodengleichspannung aufgrund von elektrisch-chemischen Inhomogenitäten des Mediums werden stark reduziert. Außerdem können Feststoffpartikel, die mit dem Medium mittransportiert werden, nicht mehr in die elektrochemische Grenzschicht eindringen, die sich nunmehr weitgehend im geschützten Bereich innerhalb der Keramikschicht befindet. Daher verursachen mit dem Medium mitgeführte Feststoffpartikel deutlich geringere Störspannungen, als ohne poröse Keramikschicht.

Allerdings sind mit einer solchen porösen Keramikschicht auch Probleme verbunden: So kann diese Keramikschicht durch Abrasion oder Schlagbeanspruchung beschädigt werden, wenn das Medium harte Feststoffe mit sich führt. Darüber hinaus ist die chemische Beständigkeit der verwendeten Keramiken in manchen Fällen nicht ausreichend. Entsprechendes gilt für die Temperaturschockfestigkeit dieser Keramiken. Schließlich können elektrisch isolierende Öle oder Fette, die vom Medium mitgeführt werden, in die Poren der Keramik eindringen, so daß die galvanisch leitende Verbindung vom Medium zur Metallelektrode unterbrochen wird.

Damit ist es die Aufgabe der Erfindung, ein magnetisch-induktives Durchflußmeßgerät sowie ein Verfahren zur Herstellung eines magnetisch-induktiven Durchflußmeßgeräts anzugeben, mit denen eine derartige Elektrode zur Verfügung gestellt wird, die ein möglichst rauschfreies Durclaflußsignal bei hoher mechanischer Beständigkeit zur Verfügung stellt.

Ausgehend von dem eingangs beschriebenen magnetisch-induktiven Durchflußmeßgerät ist diese Aufgabe dadurch gelöst, daß die Elektrode eine elektrisch leitfähige Diamantbeschichtung aufweist.

Erfindungsgemäß ist also vorgesehen, daß ein direkter Kontakt des Mediums mit der Elektrode vermieden wird, indem die Elektrode mit einer elektrisch leitfähigen Diamantbeschichtung versehen ist. Dabei ist es gemäß einer bevorzugten Weiterbildung der Erfindung insbesondere vorgesehen, daß die elektrisch leitfähige Diamantbeschichtung den in Kontakt mit dem strömenden Medium kommenden Bereich der Elektrode vollständig bedeckt.

Damit wird eine Elektrode für ein magnetisch-induktives Durchflußmeßgerät erhalten, die eine große Härte und eine hohe Abrasionsfestigkeit bei weitgehendster chemischer Beständigkeit aufweist. Darüber hinaus zeigt diese Elektrode ein elektrisch und elektrochemisch inertes Verhalten, insbesondere nämlich auch keinen piezoelektrischen Effekt, und es bauen sich keine oder nur geringe elektrochemische Spannungen auf.

Trotz dieser Vorteile läßt sich eine elektrisch leitfähige Diamantbeschichtung mit einer hinreichend hohen elektrischen Leitfähigkeit erzielen. Gemäß einer bevorzugten Weiterbildung der Erfindung ist dabei insbesondere vorgesehen, daß die Diamantbeschichtung einen spezifischen Widerstand im Bereich von 10⁻⁵ bis 10 Ωm aufweist. Damit sind keine durchgehenden Poren mehr erforderlich, um eine galvanisch leitende Verbindung zwischen dem Medium und der Elektrode herzustellen.

Als elektrisch leitfähige Diamantbeschichtung kommt eine Mehrzahl von Materialien in Betraclat, Gemäß einer bevorzugten Weiterbildung der Erfindung ist jedoch vorgesehen, daß als Diamantbeschichtung eine dotierte polykristalline Diamantschicht vorgesehen ist. Alternativ dazu kann als Diamantbeschichtung auch eine dotierte Schicht aus amorphen "diamond-like carbon"-Materialien (ADLC-Schicht) vorgesehen sein.

Gemäß einer bevorzugten Weiterbildung der Erfindung ist ferner als Dotierung Bor vorgesehen. Insbesondere ist gemäß einer bevorzugten Weiterbildung der Erfindung vorgesehen, daß die Diamantbeschichtung mittels eines CVD-Verfahrens (chemische Abscheidung aus der Gasphase) aufgebracht ist.

Der mit der Diamantbeschichtung versehene Bereich der Elektrode besteht vorzugsweise aus einem Metall. Ganz besonders bevorzugt ist dabei, daß der mit der Diamantschicht versehene Bereich der Elektrode aus Niob, Tantal oder Wolfram besteht. Diese Materialien zeigen eine besonders gute Anhaftung einer mittels eines CVD-Verfahrens aufgebrachten Diamantbeschichtung. Dabei ist es im übrigen nicht erforderlich, daß das Material, auf das die Diamantbeschichtung aufgebracht wird, die vollständige Elektrode bildet. Insbesondere kann also vorgesehen sein, daß die Elektrode aus wenigstens zwei voneinander verschiedenen Metallen gebildet ist, wobei zur Beschichtung mit der Diamantschicht vorzugsweise eines der zuvor genannten Metalle verwendet wird, um die angesprochene gute Anhaftung der Diamantbeschichtung zu erzielen.

Ausgehend von dem eingangs beschriebenen Verfahren ist die zuvor genannte Aufgabe dadurch gelöst, daß die Elektrode mit einer elektrisch leitfähigen Diamantbeschichtung beschichtet wird.

Bevorzugte Weiterbildungen des erfindungsgemäßen Verfahrens ergeben sich in Analogie zu den zuvor beschriebenen bevorzugten Weiterbildungen des erfindungsgemäßen magnetisch-induktiven Durchflußmeßgeräts.

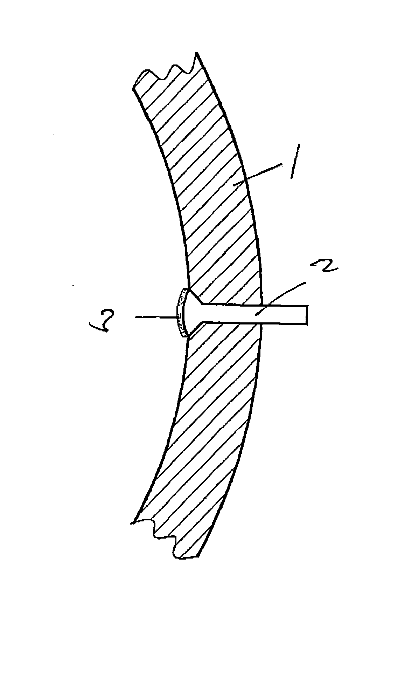

Im einzelnen gibt es nun eine Vielzahl von Möglichkeiten, das erfindungsgemäße magnetisch-induktive Durchflußmeßgerät sowie das erfindungsgemäße Herstellungsverfahren für ein magnetisch-induktives Durchflußmeßgerät auszugestalten und weiterzubilden. Dazu wird auf die den unabhängigen Patentansprüchen nachgeordneten Patentansprüche sowie auf die nachfolgende detaillierte Beschreibung eines bevorzugten Ausführungsbeispiels der Erfindung unter Bezugnahme auf die Zeichnung verwiesen, In der Zeichnung zeigt die einzige Figur schematisch ein Meßrohr eines magnetisch-induktiven Durchflußmeßgeräts mit einer in dem Meßrohr vorgesehenen Elektrode, die eine elektrisch leitfähige Diamantbeschichtung aufweist.

Wie aus der Figur ersichtlich, ist in einem Meßrohr 1 eines magnetisch-induktiven Durchflußmeßgeräts eine Elektrode 2 derart angeordnet, daß diese bei durch das Meßrohr hindurchströmendem Medium in galvanisch leitenden Kontakt mit diesem kommt. Die Elektrode 2 tritt jedoch nicht direkt mit dem strömenden Medium in Kontakt, sondern mittelbar, nämlich über eine auf dem dem strömenden Medium zugewandten Bereich der Elektrode 2 vorgesehene elektrisch leitfähige Diamantbeschichtung 3. Der Bereich der Elektrode 2, der ansonsten direkt in Kontakt mit dem strömenden Medium käme, ist gemäß dem vorliegend beschriebenen bevorzugten Ausführungsbeispiel der Erfindung vollständig mit der elektrisch leitfähigen Diamantbeschichtung 3 versehen. Auf diese Weise können das Medium und darin mitgeführte Feststoffpartikel nicht direkt mit der vorliegend aus Niob hergestellten Elektrode 2 in Kontakt treten, sondern nur mittelbar, nämlich über die elektrisch leitfähige Diamantbeschichtung 3.

Als elektrisch leitfähige Diamantbeschichtung 3 ist gemäß dem vorliegend beschriebenen bevorzugten Ausführungsbeispiel der Erfindung eine mit Bor dotierte polykristalline Diamantschicht vorgesehen, die mittels eines CVD-Verfahrens aufgebracht worden ist. Durch die Dotierung mit Bor läßt sich ein spezifischer Widerstand der elektrisch leitfähigen Diamantschicht 3 im Bereich zwischen 10⁻⁵ bis 10 Ωm einstellen. Damit wird eine Beschichtung mit den für Diamant typischen Eigenschaften, nämlich chemischer Inertheit, Temperaturbeständigkeit bis wenigstens 600 °C sowie Formstabilität erreicht.

Das CVD-Verfahren wird typischerweise in einem Druckbereich zwischen 10 und einigen 100 mbar aus elektrisch oder thermisch aktivierten, kohlenwasserstoffhaltigen Gasphasen durchgeführt. Die zu beschichtende Elektrode 2 wird dabei auf einer Temperatur zwischen 500 °C und 1.000 °C gehalten, womit insgesamt Abscheidungsraten von bis zu einigen 1.00 µm/h erzielt werden.

Die Dotierung mit Bor kann auf verschiedene Weisen erzielt werden, z. B. durch das Verdampfen von metallischem Bor oder einer flüssigen Borquelle, wie Trialkylborat. Ferner kann auch ein Gas, wie Diboran, verwendet werden.

## Patentansprüche

1. Magnetisch-induktives Durchflußmeßgerät mit einem Meßrohr (I) zum Führen eines strömenden Mediums und einer in dem Meßrohr (1) vorgesehenen Elektrode (2), die in galvanisch leitenden Kontakt mit dem strömenden Medium kommt, **dadurch gekennzeichnet, daß** die Elektrode (2) eine elektrisch leitfähige Diamantbeschichtung (3) aufweist.

2. Magnetisch-induktives Durchflußmeßgerät nach Anspruch 1, **dadurch gekennzeichnet, daß** die elektrisch leitfähige Diamantbeschichtung (3) den in Kontakt mit dem strömenden Medium kommenden Bereich der Elektrode (2) vollständig bedeckt.

3. Magnetisch-induktives Durchflußmeßgerät nach Anspruch 1 oder 2, **dadurch gekennzeichnet, daß** als Diamantbeschichtung (3) eine dotierte polykristalline Diamantschicht vorgesehen ist.

4. Magnetisch-induktives Durchflußmeßgerät nach Anspruch 1 oder 2, **dadurch gekennzeichnet, daß** als Diamantbeschichtung (3) eine dotierte ADLC-Schicht vorgesehen ist.

5. Magnetisch-induktives Durchflußmeßgerät nach einem der Ansprüche 1 bis 4, **dadurch gekennzeichnet, daß** als Dotierung Bor vorgesehen ist.

6. Magnetisch-induktives Durchflußmeßgerät nach einem der Ansprüche 1 bis 5, **dadurch gekennzeichnet, daß** die Diamantbeschichtung (3) mittels eines CVD-Verfahrens aufgebracht ist.

7. Magnetisch-induktives Durchflußmeßgerät nach einem der Ansprüche 1 bis 6, **dadurch gekennzeichnet, daß** der mit der Diamantbeschichtung (3) versehene Bereich der Elektrode (2) aus Niob, Tantal oder Wolfram besteht.

8. Magnetisch-induktives Durchflußmeßgerät nach einem der Ansprüche 1 bis 7, **dadurch gekennzeichnet, daß** die Diamantbeschichtung (3) einen spezifischen Widerstand im Bereich von 10⁻⁵ bis 10 Ωm aufweist.

9. Verfahren zur Herstellung eines magnetisch-induktiven Durchflußmeßgeräts, wobei eine Elektrode (2) in einem Meßrohr (1) zum Führen eines strömenden Mediums derart angeordnet wird, daß die Elektrode (2) in galvanisch leitenden Kontakt mit dem strömenden Medium kommt, **dadurch gekennzeichnet, daß** die Elektrode (2) mit einer elektrisch leitfähigen Diamantbeschichtung (3) beschichtet wird.

10. Verfahren zur Herstellung eines magnetisch-induktiven Durchflußmeßgeräts nach Anspruch 9, **dadurch gekennzeichnet, daß** der in Kontakt mit dem strömenden Medium kommende Bereich der Elektrode (2) mit der Diamantbeschichtung (3) vollständig bedeckt wird.

11. Verfahren zur Herstellung eines magnetisch-induktiven Durchflußmeßgeräts nach Anspruch 10 oder 11, **dadurch gekennzeichnet, daß** als Diamantbeschichtung (3) eine dotierte polykristalline Diamantschicht erzeugt wird.

12. Verfahren zur Herstellung eines magnetisch-induktiven nach Anspruch 10 oder 11, **dadurch gekennzeichnet, daß** als Diamantbeschichtung (3) eine dotierte ADLC-Schicht erzeugt wird.

13. Verfahren zur Herstellung eines magnetisch-induktiven Durchflußmeßgeräts nach einem der Ansprüche 9 bis 12, **dadurch gekennzeichnet, daß** zur Dotierung Bor verwendet wird, insbesondere durch das Verdampfen von metallischem Bor oder einer flüssigen Borquelle, wie Trialkylborat, oder in Form eines Gases, wie Diboran.

14. Verfahren zur Herstellung eines magnetisch-induktiven Durchflußmeßgeräts nach einem der Ansprüche 9 bis 13, **dadurch gekennzeichnet, daß** die Diamantbeschichtung (3) mittels eines CVD-Verfahrens aufgebracht wird.

15. Verfahren zur Herstellung eines magnetisch-induktiven Durchflußmeßgeräts nach einem der Ansprüche 9 bis 14, **dadurch gekennzeichnet, daß** für den Bereich der Elektrode (2), der mit der Diamantbeschichtung (3) versehen wird, Niob, Tantal oder Wolfram verwendet wird.
